# EUROPEAN PATENT APPLICATION

(11) **EP 3 945 123 A1**
(43) Date of publication of application: **02.02.2022**
(21) Application number: 20382703.5
(22) Date of filing: 31.07.2020
(51) Int. Cl.: C09J 135/08, C08L 1/02, C08L 5/08, C08L 5/14, C08L 89/00, C08L 97/00

(54) **ADHESIVE COMPOSITION BASED ON MALEIC ANHYDRIDE/VINYL ETHER-COPOLYMERS AND CROSSLINKERS OF NATURAL ORIGIN AND A METHOD FOR PREPARING IT**

(71) Applicant: Universitat Politècnica De Catalunya, 08034 Barcelona (ES)
(72) Inventor: HOYO PÉREZ, Javier, 08014 Barcelona (ES); TZANOV, Tzanko, 08223 Terrassa (ES)
(74) Representative: Segui Quetglas, Margalida

(57) **Abstract**

An adhesive composition and a method for the preparation of an adhesive composition are disclosed. The adhesive composition comprises a first compound including at least one copolymer comprising a lower alkyl vinyl ether-maleic anhydride copolymer and/or mixtures thereof; and a second compound including at least one natural origin compound containing at least two hydroxyl or primary or secondary amines groups and/or mixtures thereof. The natural origin compound is selected from the group consisting of lignin, cellulose, hemicellulose, a polysaccharide, a protein and/or their derivatives and mixtures thereof.

## Description

### TECHNICAL FIELD

The present invention relates to an adhesive composition and to a method for the preparation of said adhesive composition. The adhesive composition can be used as adhesive to be used in contact with inert surfaces such as wood, foam, plastics, metals, etc.

### BACKGROUND OF THE INVENTION

The depletion of fossil-based resources and the environmental threat of its exploitation require the industrial use of raw materials from renewable and abundant origin sources. Bioresidues are obtained from current industrial processes in which natural polymers and proteins are considered biomass of low cost with little commercial profiteering to be discarded or incinerated for power generation. Therefore, the valorization of these biowastes by conversion into value-added chemicals such as adhesives will reduce simultaneously the fossil resources consumption and the waste generation.

Various adhesive compositions suitable for use in surgical, medical, and industrial applications are known. However, most of them are obtained from fossil-based resources, contain toxic solvents and/or require complex synthetic methods.

One of the adhesive compositions and method for the preparation thereof that avoids the use of toxic solvents is proposed by the WO 1998043595-A1. This document discloses a denture adhesive composition comprising a partial salt of a lower alkyl vinyl ether-maleic acid copolymer, the partial salt copolymer comprising carboxyl groups, of which from about 50 % to about 95 % are neutralized by one or more metal cations. The partial salt copolymer is covalently crosslinked with an organic crosslinker and the molar ratio of organic crosslinker to carboxyl groups, prior to neutralization by the metal cations, is from about 0.1 % to about 30 %. The compositions may also comprise at least one non-adhesive self-supporting layer. The WO 1998043595-A1 requires the presence of cations in the mixture and uses synthetic polyol compounds for the crosslinking process in water to obtain a sticky material that requires a non-adhesive layer to be removed prior use. On the contrary, the adhesive composition of the present invention contains natural polyols, polyamines and/or mixtures thereof that are used in a basic solution/solvent without the need of using cations to form an adhesive composition that is cured in contact with the surfaces to glue.

The WO 1991009883-A1 proposes an adhesive element that exhibits excellent properties with respect to a variety of substrates, such as, skin, glass, fabric, paper, plastic, and other non-porous surfaces which is non-toxic, and non-sensitizing. The element exhibits high cohesive strength so that its integrity is maintained on removal from the substrate leaving no residues and is highly flexible so that total confirmation with the underlying shape of the substrate is maintained. The adhesive composition is the hydrolysis or esterification product of a methylvinyl ether/maleic anhydride co-polymer with a hydroxylated compound.

The WO 9219390-A provides a continuous process for the production of pressure sensitive adhesive mass compositions and adhesive elements that exhibit excellent properties with respect to a variety of substrates, which is non-toxic and non-sensitizing. The element exhibits high cohesive strength so that its integrity is maintained on removal from the substrate leaving no residues and is highly flexible so that total confirmation with the underlying shape of the substrate is maintained. The adhesive composition includes the hydrolysis/esterification product of a methyl vinyl ether/maleic anhydride copolymer with a hydroxylated compound. The adhesive element is prepared by microwave heating of a mixture of the copolymer and hydroxylated compound, preferably with a surfactant, in the presence of water.

In the WO 1991009883-A1 and WO 9219390-A, the adhesive composition is prepared by the reaction of methyl vinyl ether/maleic anhydride co-polymer with a synthetic hydroxylated compound for the crosslinking process in water to obtain a sticky material that requires a non-adhesive layer to be removed prior use. In contrast, in the present invention alkyl (alkyl = c1-c8) vinyl ether/maleic anhydride co-polymer is reacted with natural polyols, polyamines and/or mixtures thereof in a basic solution/solvent to form an adhesive composition that is cured in contact with the surfaces to glue. Moreover, the methods described in WO 1991009883-A1 and WO 9219390-A are different to that used in the present invention, due to the they use a mold with the desired shape of the ultimate element and require high reaction temperatures (> 70ºC) or microwave energy.

New adhesive compositions and methods for the preparation thereof are therefore needed.

### DESCRIPTION OF THE INVENTION

An object of the present invention is thus to provide an adhesive composition, and a method for the preparation of the same, that is partially obtained from bioresidues obtained from food, paper, and/or textile industrial processes and that depending on the bioresidue presents different properties in terms of adhesion strength, viscosity, color, etc. The adhesive is produced through a fast and environmentally friendly process with absence of toxic reagents or solvents and its properties can be easily tuned to be used with different materials and purposes.

The proposed adhesive composition can resist the stresses typically encountered in furniture and building.

This object is fulfilled by an adhesive composition with the characteristics of claim 1 and by a method with the features of claim 9.

According to one aspect, present invention provides an adhesive composition, comprising a first compound including at least one copolymer comprising a lower alkyl vinyl ether-maleic anhydride copolymer and/or mixtures thereof, and a second compound including at least one natural origin compound containing at least two hydroxyl or primary or secondary amines groups and/or mixtures thereof. In the proposed adhesive composition the natural origin compound can be any of lignin, cellulose, hemicellulose, a polysaccharide, a protein, and/or their derivatives and mixtures thereof.

In a particular embodiment, the natural origin compound is lignin.

In another particular embodiment, the natural origin compound is a polysaccharide such as chitosan or hyaluronic acid.

In another particular embodiment, the natural origin compound is a protein, for example bovine serum albumin (BSA), casein, soyprotein, gelatin, or elastin.

In an embodiment, the second compound is present in a range from 1% to 50% by weight of the compounds of the adhesive composition. In particular, the second compound is present in the range from 5% to 20%.

In an embodiment, the adhesive composition also includes a third compound acting as filler. The filler can be present in the range from 1% to 50% by weight of the compounds of the adhesive composition.

The lower alkyl vinyl ether-maleic anhydride copolymer can be in derivative form including anhydride, acidic, salt and/or mixtures thereof.

In an embodiment, the lower alkyl vinyl ether-maleic anhydride copolymer includes a C1-C8 alkyl group. In another embodiment, the lower alkyl vinyl ether-maleic anhydride copolymer includes a C1-C6 alkyl group. In yet a more particular embodiment, the alkyl group is C1-C4.

In an embodiment, the adhesive composition also comprises a plasticizer, which can be present in the range from 0.1% to 30% by weight of the compounds of the adhesive composition.

The plasticizer can comprise dimethyl phthalate, diethyl phthalate, dioctyl phthalate, glycerin, diethylene glycol, triethylene glycol, Igepal, Gafac, sorbitol, tricresyl phosphate, dimethyl sebacate, ethyl glycolate, ethylphthalyl ethyl glycolate, o- and p-toluene ethyl sulfonamide, and/or mixtures thereof.

In an embodiment, the adhesive composition also includes at least one of a fragrance, a colorant, a preservative, a surfactant and/or mixtures thereof.

In some embodiments, the average molecular weight of the lower alkyl vinyl ether-maleic anhydride copolymer is from about 1 x 10⁵ to 3 x 10⁶.

Present invention also proposes, according to another aspect, a method for the preparation of an adhesive composition that comprises obtaining an adhesive composition by means of forming a mixture by reacting a first compound with a second compound in the presence of a solvent. The first compound includes at least one copolymer comprising a lower alkyl vinyl ether-maleic anhydride copolymer and/or mixtures thereof, and the second compound includes at least one natural origin compound containing at least two hydroxyl or primary or secondary amines groups and/or mixtures thereof. The natural origin compound is selected from the group consisting of lignin, cellulose, hemicellulose, a polysaccharide, a protein and/or their derivatives and mixtures thereof.

In an embodiment, the method further comprises the removal of the excess of solvent, for example by a centrifugation or decantation method.

In an embodiment, the method also comprises coating the adhesive composition on the surface of a material and heating the surface, for example at a temperature from about 40 to 90ºC, particularly between 50-65ºC.

In an embodiment, the solvent comprises water.

In another embodiment, the solvent comprises an organic or inorganic base dissolved in water, such that the pH of the mixture is maintained between 5.5 and 8.5. In a particular embodiment, the base comprises ammonia hydroxide.

In some embodiments, a plasticizer, a filler and/or at least one of: a fragrance, a colorant, a preservative, a surfactant and/or mixtures thereof, is/are also present in the mixture.

Embodiments of the present invention also propose the use of the adhesive composition of the first aspect for coating inert surfaces.

### DETAILED DESCRIPTION OF PREFERRED EMBODIMENTS

Present invention relates to adhesive compositions and the method to obtain them, particularly suitable as adhesives to be used in contact with inert surfaces such wood, foam, plastic, metal, etc. Nevertheless, the adhesive composition can be also used for gluing other types of surfaces.

The proposed adhesive composition can be formulated and used in the form of pastes and liquids. However, other forms such powders, aerosols, etc. are also envisaged.

The adhesive composition is made of at least one copolymer selected from the group consisting of lower alkyl vinyl ether-maleic anhydride copolymer and/or mixtures thereof, and at least one natural origin compound containing at least two hydroxyl or amino groups and/or mixtures thereof.

The above ingredients of the adhesive composition can be combined with adjunct ingredients including conventional plasticizers, fillers, fragrances, colorants, preservatives, surfactants, etc.

### Lower alkyl vinyl ether-maleic anhydride copolymer

The lower alkyl vinyl ether-maleic anhydride copolymer and derivatives thereof can be obtained by polymerizing a lower alkyl vinyl ether monomer, such as methyl vinyl ether, ethyl vinyl ether, divinyl ether, propyl vinyl ether and isobutyl vinyl ether, with maleic anhydride to yield the corresponding lower alkyl vinyl ether-maleic anhydride copolymer. "lower alkyl" in the copolymer includes C1-C8 alkyl, particularly C1-C6 alkyl, and yet more particularly C1-C4 alkyl. Salt, acidic and anhydride forms of the copolymers are commercially available and can be used.

The lower alkyl vinyl ether-maleic anhydride copolymer and derivatives thereof can be provided under the GANTREZ^{™}, presenting different combination(s) of lower alkyl vinyl ether-maleic anhydride copolymer and derivatives. Poly(methyl vinyl ether-alt-maleic acid) from Sigma-Aldrich is also particularly suitable in the practice of this invention.

### Natural Origin Compound

The natural origin compound is incorporated by reaction with maleic anhydride moieties of the copolymer and acts as a crosslinking group in the adhesive. Suitable compounds contain at least two of the following groups: hydroxyl or primary or secondary amines, which are available to covalently crosslink with a carboxyl group of the copolymer. Particular examples are lignin, cellulose, hemicellulose, polysaccharides, proteins and/or combinations thereof.

### Adjunct ingredients

In some embodiments, the adhesive composition can comprise a plasticizer selected from the group consisting of dimethyl phthalate, diethyl phthalate, dioctyl phthalate, glycerin, diethylene glycol, triethylene glycol, Igepal, Gafac, sorbitol, tricresyl phosphate, dimethyl sebacate, ethyl glycolate, ethylphthalyl ethyl glycolate, o- and p-toluene ethyl sulfonamide, and/or mixtures thereof.

In some embodiments, one or more filler compounds can also be included.

Other adjunct ingredients can include fragrances, colorants, preservatives, surfactants, etc.

The adhesive composition can be prepared by the following method. The term "mixture", as used herein, refers to a solution, slurry, or suspension.

Lower alkyl vinyl ether maleic anhydride copolymer can be obtained either from commercial suppliers for example the trade names disclosed previously or by copolymerization of a lower alkyl vinyl ether monomer with maleic anhydride to yield the corresponding lower alkyl vinyl ether-maleic anhydride copolymer.

For a solution process, a natural origin compound containing hydroxyl and/or amino groups is dissolved in a solvent included in a suitable vessel, where the solvent can comprise water or an organic or inorganic base dissolved in water. Typical organic bases are, for example, monoethanolamine, diethanolamine, and triethanolamine (TEA). Typical inorganic bases are alkali hydroxides, as for example, sodium hydroxide, potassium hydroxide or ammonia hydroxide. Ammonia hydroxide is a preferred base. The quantity of base required to accelerate the crosslinking reaction should be such as to maintain the pH of the reaction medium between 5.5 to 8.5.

The addition of the alkyl vinyl ether maleic anhydride copolymer to the natural origin compound containing hydroxyl and/or amino groups solution is performed under constant agitation by stirring or any other method for agitation; the agitation is maintained until the completion of the reaction to enhance the intimate contact between the reagents and the consequent crosslinking. This admixing is carried out particularly slowly (for example over a period of 1 to 45 minutes) and maintaining the stirring to ensure uniformity of the mixture. The temperature of the reagents mixing ranges from 1ºC to 95ºC, particularly between 20 to 40ºC. It can be carried perfectly at room temperature, without additional heat.

For some embodiments, the mixture contains two phases, being the aqueous phase separated and discarded e.g. by centrifugation or decantation, particularly by centrifugation. The remaining paste is the adhesive composition of this invention and presents a shelf-life of several weeks.

At use, the adhesive composition is coated on the surface(s) of the material(s) to be glued and these surface(s) is/are put into contact and heated. To heat the surfaces different temperatures can be used. For example, the temperature can be between 40 to 90ºC, particularly between 45-70ºC, and more particularly between 50-65ºC. The crosslinking process is accelerated by the effect of the temperature. In the present invention because of the nature of the natural compounds present in the adhesive composition lower temperature ranges can be used to achieve the crosslinking process in a shorter period of time.

Following, particular examples of the present invention are detailed.

### Example 1:

In this first example, 0.4 g of Lignin, alkali with low sulfonate content are added to 20 mL of ammonia solution (1M) and the solution is magnetically stirred in a recipient/vessel until the complete dissolution of the lignin at room temperature (20ºC). 2.0 g of Poly(methyl vinyl ether-alt-maleic anhidre) (PVME/MA) are added to the vessel while increasing the agitation speed to overcome the increase of the solution viscosity. After the complete dissolution of PVME/MA, 4.0 g more of PVME/MA are slowly added to the solution and the magnetic stirring increased to favor the perfect mixing of the reagents. The total quantity of PVME/MA in this example is 6.0 gr.

The resulting solution is centrifuged at 40ºC and 4000 rpm during 45 min, obtaining two phases. The aqueous one is discarded, while the resulting paste is centrifuged once more at the same conditions. The aqueous phase is once more discarded and the resulting paste with low water content is the adhesive that can be stored for several weeks at room temperature.

The use of the adhesive composition can include the dust cleaning of the surface(s) to join and the spread of enough quantity of the adhesive on one of the surfaces and placing both surfaces in contact. The time required for adhesion is reduced thanks to increasing the temperature at 60ºC during 2 hours. The use of the adhesive composition in other embodiments can include the gluing of (wood/plastic) chipboards.

### Example 2:

In this second example, 0.35 g of chitosan 150KDa are added to 20 mL of ammonia solution (1M) and the solution is magnetically stirred in a vessel until obtaining an homogeneous suspension of the chitosan at 30ºC. 2.0 g of Poly(methyl vinyl ether-alt-maleic anhydride) (PVME/MA) are added to the vessel while increasing the agitation speed to overcome the increase of the solution viscosity. After the complete dissolution of PVME/MA, 2.0 gr more of PVME/MA are slowly added to the solution and the magnetic stirring increased to favor the perfect mixing of the reagents. The total quantity of PVME/MA in this example is 4.0 gr.

The resulting solution is centrifuged at 40ºC and 4000 rpm during 45 min, obtaining two phases. The aqueous one is discarded, while the resulting paste is centrifuged once more at the same conditions. The aqueous phase is once more discarded and the resulting paste with low water content is the adhesive that can be stored for several weeks at room temperature.

The use of the adhesive composition can include the dust cleaning of the surface(s) to join and the spread of enough quantity of the adhesive on one of the surfaces and placing both surfaces in contact. The time required for adhesion is reduced thanks to increasing the temperature at 60ºC during 2 hours. The use of the adhesive composition in other embodiments can include the gluing of (wood/plastic) chipboards.

### Example 3:

In this third example, 0.35 g of the protein bovine serum albumin (BSA) are added to 20 mL of ammonia solution (1M) and the solution is magnetically stirred in a vessel until obtaining the complete dissolution of the BSA at room temperature (20ºC). 2.0 g of Poly(methyl vinyl ether-alt-maleic anhydride) (PVME/MA) are added to the vessel while increasing the agitation speed to overcome the increase of the solution high viscosity. Mechanical stirring is required to obtain a homogeneous paste. The total quantity of PVME/MA added is 2.0 gr.

The resulting paste without the need of further phase separation is the adhesive composition that can be stored for several weeks at room temperature.

The use of the adhesive composition can include the dust cleaning of the surface(s) to join and the spread of enough quantity of the adhesive on one of the surfaces and placing both surfaces in contact. The time required for adhesion is reduced thanks to increasing the temperature at 60ºC during 2 hours. The use of the adhesive composition in other embodiments can include the gluing of (wood/plastic) chipboards.

Unless otherwise indicated, all numbers expressing measurements, conditions, and so forth used in the specification and claims are to be understood as being modified in all instances by the term "about". Accordingly, unless indicated to the contrary, the numerical parameters set forth in this specification and attached claims are approximations that can vary depending upon the desired properties sought to be obtained by the presently disclosed subject matter.

According to descriptions above, various alterations may be achieved. All applications, modifications and alterations required to be protected in the claims may be within the protection scope of the present disclosure.

The scope of the present invention is defined in the following set of claims.

## Claims

1. An adhesive composition, comprising:
a first compound including at least one copolymer comprising a lower alkyl vinyl ether-maleic anhydride copolymer and/or mixtures thereof; and
a second compound including at least one natural origin compound containing at least two hydroxyl or primary or secondary amines groups and/or mixtures thereof, the natural origin compound being selected from the group consisting of lignin, cellulose, hemicellulose, a polysaccharide, a protein and/or their derivatives and mixtures thereof.

2. The adhesive composition of claim 1, wherein the second compound is present in a range from 1% and 50% by weight of the compounds of the adhesive composition.

3. The adhesive composition of any one of the previous claims, wherein the lower alkyl vinyl ether-maleic anhydride copolymer is in a derivative form including anhydride, acidic, a salt and/or mixtures thereof.

4. The adhesive composition of any one of the previous claims, wherein the lower alkyl vinyl ether-maleic anhydride copolymer includes a C1-C8 alkyl group, preferably a C1-C6, and yet more preferably a C1-C4 alkyl group.

5. The adhesive composition of any one of the previous claims, further comprising a plasticizer selected from the group consisting of dimethyl phthalate, diethyl phthalate, dioctyl phthalate, glycerin, diethylene glycol, triethylene glycol, Igepal, Gafac, sorbitol, tricresyl phosphate, dimethyl sebacate, ethyl glycolate, ethylphthalyl ethyl glycolate, o- and p-toluene ethyl sulfonamide, and/or mixtures thereof.

6. The adhesive composition of claim 5, wherein the plasticizer is present in a range between 0.1% and 30% by weight of the compounds of the adhesive composition.

7. The adhesive composition of any one of the previous claims, further comprising at least one of a fragrance, a colorant, a preservative, a surfactant and/or mixtures thereof.

8. The adhesive composition of any one of the previous claims, wherein it is in the form of a paste or of a liquid.

9. A method for the preparation of an adhesive composition, comprising forming a mixture by reacting a first compound with a second compound in the presence of a solvent, the first compound including at least one copolymer comprising a lower alkyl vinyl ether-maleic anhydride copolymer and/or mixtures thereof, and the second compound including at least one natural origin compound containing at least two hydroxyl or primary or secondary amines groups and/or mixtures thereof, wherein the natural origin compound is selected from the group consisting of lignin, cellulose, hemicellulose, a polysaccharide, a protein and/or their derivatives and mixtures thereof.

10. The method of claim 9, further comprising removing an excess of solvent via a centrifugation or decantation method.

11. The method of claim 9 or 10, further comprising coating the adhesive composition on a surface of a material and heating the surface at a given temperature.

12. The method of claim 9, wherein the solvent comprises water or an organic or inorganic base dissolved in water.

13. The method of any one of claims 9-12, wherein the second compound is present in a range from 1% to 50% by weight of the compounds of the adhesive composition.

14. The method of any one of claims 9-13, wherein the lower alkyl vinyl ether-maleic anhydride copolymer includes a C1-C8 alkyl group, preferably a C1-C6, and yet more preferably a C1-C4 alkyl group.

15. The method of any one of claims 9-14, wherein a plasticizer and/or at least one of: a fragrance, a colorant, a preservative, a surfactant and/or mixtures thereof, is/are also present in the mixture.
